# EUROPEAN PATENT SPECIFICATION

(11) **EP 0 508 773 B1**
(45) Date of publication and mention of the grant of the patent: **22.01.1997**
(21) Application number: 92303157.9
(22) Date of filing: 09.04.1992
(51) Int. Cl.: A62C 8/06

(54) **Fire barrier material**
Material für Brandschutzschirm
Matériau pour écran anti-feu

(30) Priority: 10.04.1991 GB 9107615; 10.12.1991 GB 9126182
(43) Date of publication of application: 14.10.1992
(73) Proprietor: JACTONE PRODUCTS LIMITED, Tipton, West Midlands, DY4 9AE (GB)
(72) Inventor: Halford, Craig Anthony John, Kigswinford, West Midlands DY6 9RP (GB); Halford, Anthony Harry John, Coseley, West Midlands WV14 9RH (GB)
(74) Representative: Makovski, Priscilla Mary

(56) References cited:
- EP-A- 0 195 545
- WO-A-90/09281
- DE-A- 2 753 669
- DE-U- 9 101 312
- FR-A- 2 149 319
- NL-A- 7 403 041
- US-A- 5 051 290

## Description

This invention relates to a fire barrier material for use as a fire blanket.

It is well known that one of the most difficult domestic fires to deal with is a burning chip pan. Because of the oil, the temperature of such a burning pan can be so high that only a limited number of materials have the requisite fire barrier properties and flexibility for use against the fire. A further problem is that the oil vapours easily reach a temperature above their flashpoint; if the material is permeable the vapours will pass through it and ignite above it.

Known fire blankets are made from various fire barrier materials, but all have disadvantages. Glass fibre fabric is flexible, relatively inexpensive and an effective fire barrier, but is permeable. It can be coated with silicon to render it impermeable, but then becomes less flexible and more expensive. Another known material is shown in EP-A-0 195 545. This comprises a PVC (polyvinyl chloride) film sandwiched between two fire retardant textile layers of acrylic fibre. The layers are connected by needling, so that fibres from the textile layers penetrate the PVC film. This material is flexible, substantially impermeable and effective as a fire barrier, but is relatively bulky and expensive.

WO 90/09281 shows a different material, for use as a fire barrier with thermal insulation properties. The material comprises layers of knitted glass fabric, heat reflective material, woven glass fabric and abrasion resistant material. Because of the thermal insulation properties the material is much thicker than a fire blanket material, although the use of glass fabric helps to keep the material lighter and more flexible than known fire barriers with thermal insulation properties.

According to the present invention, a fire barrier material for use as a fire blanket consisting of a low permeability flexible layer interposed between two fire barrier fabric layers, in which each of the two fire barrier fabric layers consists of a glass fibre fabric.

The glass fibre fabric layers provide an effective fire barrier, whichever way up the material is used, while the low permeability layer substantially prevents vapours passing through the material. Further, the material is flexible and inexpensive to manufacture, and can be substantially thinner than the material made of acrylic fibre.

Preferably the glass fibre fabric is woven, and each layer is thinner and of a lighter weight than is usual for fire barrier material. The selvedges of the fabric may be sealed.

The low permeability layer is preferably a thermoplastics film. Conveniently a non-permeable film such as a PVC sheet is used. Alternatively polypropylene may be used. The low permeability layer may also be fire retardant.

The fire barrier material constructed from the three layers in this way is thinner than usual having a thickness between 1.00mm and 0.2mm and preferably of 0.50 mm ± 10%.

The three layers may be connected together in any convenient way. Sewing is preferred, as it is inexpensive and ensures that the material is flexible. Thus, continuous lengths of fabric and film are sewn together by a line of stitching adjacent each selvedge. One or more lines of stitching may be placed between the two selvedge lines. Nylon thread is preferably used for the stitching.

The fire barrier material made in this way is particularly effective as a fire barrier, being flexible, substantially impermeable, and inexpensive. It is especially suitable for use as a domestic fire blanket. Individual fire blankets can readily be made by cutting a length from the continuous material, and finishing the cut edges by overlocking, again with nylon thread. One edge may also be hemmed and have handles attached.

Embodiments of a fire barrier material and a fire blanket in accordance with the invention are illustrated in the accompanying drawings, in which:
Figure 1 is a diagrammatic cross-section through a fire barrier material; and
Figure 2 shows a fire blanket made from the material of Figure 1.

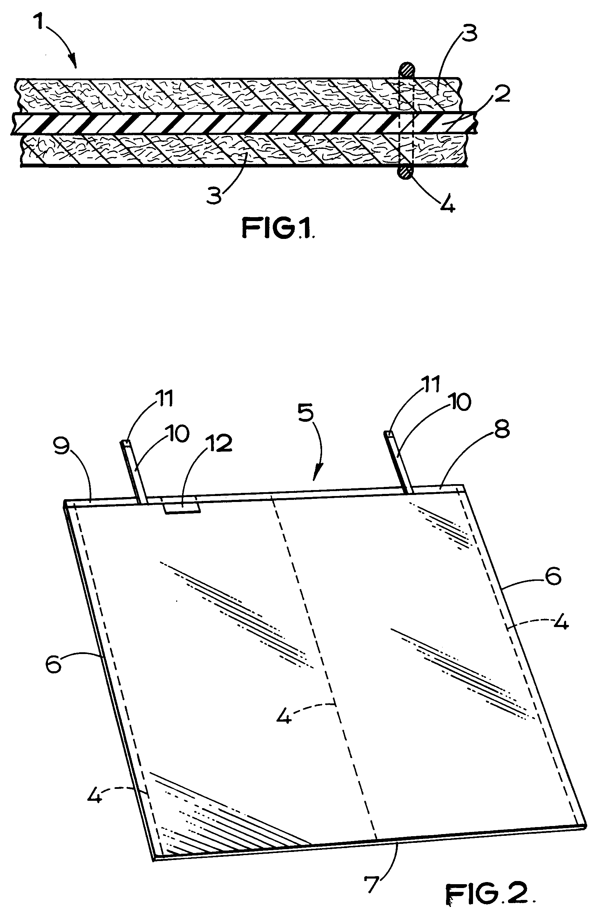

The fire barrier material 1 of Figure 1 is layered, and comprises a low permeability flexible layer 2 interposed between two layers of glass fibre fabric 3, the layers 2,3 being connected by stitching 4.

The layer 2 is of fire retardant PVC (polyvinyl chloride) film, which has a weight of 130 g/m² and a thickness of 0.1 mm. This film is substantially impermeable to gas and vapour, and will tend to melt at high temperatures.

The layers 3 are identical in structure, each being of woven glass fibre fabric having a weight of approximately 200 g/m², and a thickness of about 0.20 mm. The selvedges of the fabric are sealed. The fabric is substantially thinner and lighter than that normally used as fire barrier material.

The stitching 4 connecting the layers 2,3 uses nylon thread. Continuous lengths of the layers 2,3 are stitched together by a line of stitching adjacent each selvedge, together with one or more lines between these two selvedge lines. Figure 1 shows just one line of stitching 4.

The fire barrier material 1 made in this way is flexible, inexpensive to make, and relatively lightweight. It is also effective as a fire barrier, due to the two layers of glass fibre 3, and substantially impermeable, due to the PVC film 2. The stitching 4 increases the permeability of the film 2 very slightly, but the effect is in fact negligible, and the film 2 is still of sufficiently low permeability to prevent the passage of vapours through the material. At high temperatures the film 2 melts, but the material 1 retains its low permeability characteristic.

The material is particularly suitable for use as a domestic fire blanket, and Figure 2 shows such a blanket.

The blanket 5 shown in Figure 2 is rectangular in shape, and is cut from a length of the material 1 having three lines of stitching 4. As can be seen in Figure 2, each line of stitching 4 adjacent a selvedge 6 is about 1.5 cm from the edge of the material, while the third line of stitching 4 is approximately central. The other, cut edges 7,8 of the blanket 5 are neatened by overlocking with nylon thread. The edge 8 is also turned back, and a hem 9 of approximately 1.5 cm is formed. A pair of handles 10 are sewn into the hem 9. Each handle 10 is of cotton, with a metal tip 11, and each is positioned about 15 cm from an adjacent selvedge 6. A label 12 is also sewn into the hem 9.

The blanket 5 shown in Figure 2 can easily be folded or rolled for storage, and equally easily opened out for use on a fire, by using the handles 10.

In a modification the fire barrier material, from which the fire blanket is made, is provided with two or more lines of stitching between the line of stitching adjacent each selvedge.

The material 1 may be modified by the use of a different material for the layer 2, such as for example, polypropylene or a film of different plastics material.

## Claims

1. A fire barrier material (1) for use as a fire blanket consisting of a low permeability flexible layer (2) interposed between two layers of fire barrier fabric (3), characterised in that each of the two fire barrier fabric layers consists of a glass fibre fabric.

2. A fire barrier material (1) according to claim 1, in which the glass fibre fabric (3) is woven.

3. A fire barrier material (1) according to claim 1 or claim 2, in which the selvedges (6) of the glass fibre fabric (3) are sealed.

4. A fire barrier material (1) according to any preceding claim, in which the low permeability layer (2) comprises a thermoplastics film, which in use does not permit a substantial increase in the permeability of the fire barrier material (1).

5. A fire barrier material (1) according to claim 4, in which the low permeability layer (2) is polyvinyl chloride or polypropylene.

6. A fire barrier material (1) according to any preceding claim, in which the low permeability layer (2) is fire retardant.

7. A fire barrier material (1) according to any preceding claim in which the composite material thickness is between 1mm and 0.2mm.

8. A fire barrier material (1) according to claim 7, in which the composite material thickness is 0.50 mm ± 10%.

9. A fire barrier material (1) according to any preceding claim, in which the three layers are connected together by sewing.

10. A fire blanket (5) made from a fire barrier material (1) according to any preceding claim.

## Patentansprüche

1. Ein feuerschützendes Material (1) für den Einsatz als Feuerschutzdecke, welches aus einer elastischen Schicht (2) mit geringer Durchlässigkeit besteht, die zwischen zwei Lagen aus einem feuerschützenden Material (3) angeordnet ist,
**dadurch gekennzeichnet**, **daß**
jede der beiden Schichten aus einem feuerschützenden Material aus einer Glasleinwand besteht.

2. Ein feuerschützendes Material nach Anspruch 1,
**dadurch gekennzeichnet**, **daß**
diese Glasleinwand (3) gewebt ist.

3. Ein feuerschützendes Material (1) nach einem der Ansprüche 1 oder 2,
**dadurch gekennzeichnet**, **daß**
die Webkanten (6) der Glasleinwand (3) verschweißt sind.

4. Ein feuerschützendes Material (1) nach einem der vorausgegangenen Ansprüche,
**dadurch gekennzeichnet**, **daß**
die Schicht (2) mit gerinder Durchlässigkeit eine thermoplastische Folie enthält, welche bei ihrer Verwendung keine wesentliche Erhöhung der Durchlässigkeit des feuerschützenden Materials (1) zuläßt.

5. Ein feuerschützendes Material (1) nach Anspruch 4,
**dadurch gekennzeichnet**, **daß**
die Schicht (2) mit geringer Durchlässigkeit aus einem Polyvinylchlorid oder einem Polypropylen besteht.

6. Ein feuerschützendes Material (1) nach einem der vorausgegangenen Ansprüche,
**dadurch gekennzeichnet**, **daß**
die Schicht (2) mit geringer Durchlässigkeit feuerhemmend ist.

7. Ein feuerschützendes Material (1) nach einem der vorausgegangenen Ansprüche,
**dadurch gekennzeichnet**, **daß**
die Dicke des Verbundmaterials zwischen 1 mm und 0,2 mm beträgt.

8. Ein feuerschützendes Material (1) nach Anspruch 7,
**dadurch gekennzeichnet, daß**
die Dicke des Verbundmaterials 0,50 mm ± 10 % beträgt.

9. Ein feuerschützendes Material (1) nach einem der vorausgegangenen Ansprüche,
**dadurch gekennzeichnet**, **daß**
die drei Schichten miteinander vernäht werden.

10. Eine Feuerschutzdecke (5), welche aus einem feuerschützenden Material (1) nach einem der vorausgegangenen Ansprüche hergestellt ist.

## Revendications

1. Matériau pour écran pare-feu (1) destiné à être utilisé en tant qu'enveloppe pare-feu constituée par une couche flexible (2) de faible perméabilité intercalée entre deux couches d'un tissu pare-feu (3), caractérisé en ce que chacune des deux couches de tissu pare-feu est constituée d'un tissu de fibres de verre.

2. Matériau pour écran pare-feu (1) selon la revendication 1, dans lequel le tissu de fibres optiques (3) est tissé.

3. Matériau pour écran pare-feu (1) selon la revendication 1 ou 2, dans lequel les lisières (6) du tissu de fibres de verre (3) sont scellées.

4. Matériau pour écran pare-feu (1) selon l'une quelconque des revendications précédentes, dans lequel la couche (2) de faible perméabilité comprend un film thermoplastique qui, en fonctionnement, ne permet pas un accroissement important de la perméabilité du matériau pour écran pare-feu (1).

5. Matériau pour écran pare-feu (1) selon la revendication 4, dans lequel la couche (2) à faible perméabilité est formée de chlorure de polyvinyle ou de polypropylène.

6. Matériau pour écran pare-feu (1) selon l'une quelconque des revendications précédentes, dans lequel la couche (2) à faible perméabilité est formée d'un agent retardant la flamme.

7. Matériau pour écran pare-feu (1) selon l'une quelconque des revendications précédentes, dans lequel l'épaisseur du matériau composite est comprise entre 1 mm et 0,2 mm.

8. Matériau pour écran pare-feu (1) selon la revendication 7, dans lequel l'épaisseur du matériau composite est égale à 0,50 mm ± 10 %.

9. Matériau pour écran pare-feu (1) selon l'une quelconque des revendications précédentes, dans lequel les trois couches sont réunies entre elles par couture.

10. Enveloppe pare-feu (5) formée d'un matériau pour écran pare-feu(1)selon l'une quelconque des revendications précédentes.
